# EUROPÄISCHE PATENTSCHRIFT

(11) **EP 3 354 123 B1**
(45) Veröffentlichungstag und Bekanntmachung des Hinweises auf die Patenterteilung: **10.07.2019**
(21) Anmeldenummer: 18154167.3
(22) Anmeldetag: 30.01.2018
(51) Int. Cl.: A01B 73/04

(54) **LANDWIRTSCHAFTLICHES BODENBEARBEITUNGSGERÄT**
AGRICULTURAL SOIL WORKING IMPLEMENT
APPAREIL DE TRAITEMENT DU SOL AGRICOLE

(30) Priorität: 30.01.2017 DE 202017000493 U
(43) Veröffentlichungstag der Anmeldung: 01.08.2018
(73) Patentinhaber: PÖTTINGER Landtechnik GmbH, 4710 Grieskirchen (AT)
(72) Erfinder: Kaltseis, Martin, 4733 Heiligenberg (AT); Meindlhumer, Wilhelm, 4713 Gallspach (AT); Preimeß, Hans-Jörg, 9811 Lendorf (AT)
(74) Vertreter: Thoma, Michael

(56) Entgegenhaltungen:
- EP-A1- 3 000 298
- EP-A2- 1 179 289
- DE-A1-102007 052 353
- US-A1- 2015 068 779

## Beschreibung

Die vorliegende Erfindung betrifft ein landwirtschaftliches Bodenbearbeitungsgerät zum Anbau an einen Schlepper, mit einem Maschinenrahmen, an dem seitliche Flügel, die Bodenbearbeitungswerkzeuge tragen, angelenkt sind, wobei die Flügel jeweils zum Maschinenrahmen um eine in Arbeitsstellung liegende, zumindest näherungsweise in Fahrtrichtung weisende Rahmenschwenkachse schwenkbar sind und jeweils in zumindest zwei Flügelsektionen unterteilt sind, die zueinander um eine in Arbeitsstellung liegende, zumindest näherungsweise in Fahrtrichtung weisende Flügelschwenkachse schwenkbar sind, wobei die Flügelsektionen jeweils durch zumindest einen Druckmittelaktor miteinander verbunden sind, der bei Schwenkbewegungen der Flügelsektionen zueinander Längenänderungen erfährt und Schwenkbewegungen der Flügelsektionen aus deren Neutralstellung heraus sowohl in die eine als auch die dazu entgegengesetzte andere Schwenkrichtung gestattet.

Solche landwirtschaftlichen Bodenbearbeitungsgeräte sind beispielsweise aus der Schrift US 2015/0068779 A1, der EP 11 79 289 A2 oder der EP 300 02 98 A1 bekannt.

Ein solches Bodenbearbeitungsgerät kann beispielsweise eine Scheibenegge, ein Grubber, ein Kultivator oder eine Sämaschine oder eine Gerätekombination aus verschiedenen Bodenbearbeitungswerkzeugen sein, beispielsweise scheibenförmige Furch- und/oder Schnittwerkzeuge, Grubberzinken, Säschare, Packerräder oder Rillenwalzenelement oder andere Bodenwerkzeuge aufweisen. Dabei können die genannten Bodenbearbeitungswerkzeuge in einer oder mehreren Reihen hintereinander, die sich in Arbeitsstellung quer zur Fahrtrichtung erstrecken, an den genannten Flügeln angeordnet sein, so dass jeder Flügel eine Vielzahl von Bodenbearbeitungswerkzeugen ggf. in einer oder mehreren Reihen trägt, wobei die genannten Flügel beispielsweise rechts und links von einem zentralen Maschinenrahmen auskragend erstrecken können, wenn sich die Flügel in ihrer Arbeitsstellung befinden.

Wenn solche Bodenbearbeitungsgeräte große Arbeitsbreiten besitzen, können sich die genannten Flügel mehrere Meter auskragend erstrecken bzw. zusammen eine Arbeitsbreite von mehreren Metern bilden, so dass eine gänzlich starre Ausbildung der genannten Flügel nicht mehr sinnvoll ist, da dann die Bodenanpassung ungenügend wird und es beispielsweise bei Längsfurchen oder seitlichen Hangkanten dazu kommen kann, dass die Bodenbearbeitungswerkzeuge in einem Flügelabschnitt viel zu tief in den Boden schneiden, während sie in einem anderen Flügelabschnitt zu wenig oder gar nicht mehr in den Boden eingreifen.

Während bei Bodenbearbeitungsgeräten kleinerer Breite es üblicherweise ausreichend ist, wenn jeder der vom Maschinenrahmen auskragenden Flügel um eine Rahmenschwenkachse auf und ab wippen kann, um sich an die Bodenkontur anzupassen, benötigen Bodenbearbeitungsgeräte mit größeren Arbeitsbreiten zusätzliche Beweglichkeiten an den Flügeln, um eine ausreichende Bodenanpassung zu gewährleisten. Dabei wurde bereits vorgeschlagen, zusätzlich zu der vorgenannten Rahmenschwenkachse, die nahe am Maschinenrahmen angeordnet sein und Wippbewegungen eines Flügels insgesamt ermöglichen kann, eine Unterteilung des jeweiligen Flügels in mehrere Flügelsektionen vorzusehen und die Flügelsektionen durch Flügelschwenkachsen miteinander zu verbinden, so dass jeweils zwei benachbarten Flügelschwenkachsen miteinander verbunden sind, die sich in Arbeitsstellung liegend in Fahrtrichtung erstrecken kann und ein Auf- und Abscharnieren der Flügelsektionen zueinander ermöglicht. Dabei ist es vorteilhaft, wenn die genannten Flügelschwenkachsen den Flügelsektionen sowohl ein Überstrecken als auch ein entgegengesetztes Zusammenbeugen ermöglichen, d.h. eine äußere Flügelsektion bei beispielsweise horizontal ausgerichteter innerer Flügelsektion sowohl nach unten als auch nach oben kippen kann. Hierdurch kann zwar eine hervorragende Bodenanpassung auch bei großen Arbeitsbreiten erzielt werden, allerdings erschwert die genannte zusätzliche Beweglichkeit die exakte Steuerung des Bodenanpressdrucks über die gesamte Arbeitsbreite und auch das Verbringen der Flügel in eine stabile Transportstellung.

Um den Bodenanpressdruck über die gesamte Arbeitsbreite vernünftig steuern zu können und insbesondere auch an den äußeren Flügelsektionen einen ausreichenden Bodenanpressdruck zu erzielen, wurde deshalb bereits angedacht, den zusätzlichen Flügelschwenkachsen Druckmittelaktoren beispielsweise in Form von Hydraulikzylindern zuzuordnen, mittels derer die Flügelsektionen zueinander bezüglich der Flügelschwenkachsen rotatorisch vorgespannt werden können bzw. zueinander verschwenkt werden können, wobei beispielsweise je nach Bedarf eine äußere Flügelsektion nach unten zur überstreckten Stellung hin gedrückt oder gezogen oder nach oben zu einer gebeugten Stellung hin gedrückt oder gezogen werden kann. Mit Hilfe solcher Hydraulikzylinder kann die Verteilung des Bodenanpressdrucks über große Arbeitsbreiten besser gesteuert werden, jedoch ist es nicht ohne weiteres möglich, die zuvor genannte Problematik einer stabilen Transportstellung zu lösen.

Je nach Arbeitsbreite des Bodenbearbeitungsgeräts kann es ausreichend sein, die seitlichen Flügel um die zuvor genannte Rahmenschwenkachse nach oben zu schwenken. Bei größeren Arbeitsbreiten kann auch vorgesehen sein, dass die Flügel an einem Rahmenteil angelenkt sind, der um eine liegende, sich quer zur Fahrtrichtung erstreckende Schwenkachse aufgeschwenkt werden kann, bis sich die zuvor genannten Rahmenschwenkachsen der Flügel näherungsweise aufrecht erstrecken und dementsprechend die Flügel dann nach vorne oder hinten geschwenkt werden können, bis sich die Flügel näherungsweise fahrtrichtungsparallel erstrecken. In beiden Varianten kommt es dabei jedoch zu Instabilitäten der äußeren Flügelsegmente, die zu den inneren Flügelsegmenten, die gegenüber dem Rahmen um die Rahmenschwenkachse geschwenkt werden, zusätzlich um die vorgenannten Flügelschwenkachsen schwenken können, so dass es zu ungewollten Schwenk- bzw. Schlackerbewegungen kommen kann.

Um solche Instabilitäten beim Verbringen in die Transportstellung zu vermeiden, wurde bereits angedacht, die genannten Hydraulikzylinder, die den Flügelschwenkachsen zugeordnet sind, auch beim Verbringen der Flügel in die Transportstellung weiterhin vorzuspannen bzw. in eine Endstellung zu verfahren. Dies führt jedoch wiederum zu anderen Problemen beim Anfahren der Transportstellung bzw. kann die gewünschte Transportstellung nicht mehr ohne weiteres angefahren werden, da die Flügelsektionen hierdurch in eine überstreckte oder gebeugte Stellung geschwenkt werden, so dass sie sich nicht mehr näherungsweise in einer Ebene erstrecken. Mit anderen Worten tritt dabei eine geknickte Stellung der Flügelsektionen ein, die ein Platz sparendes Aneinanderfahren der Flügel verhindert bzw. dazu führt, dass Teile des Flügels seitlich abstehen.

Der vorliegenden Erfindung liegt die Aufgabe zugrunde, ein verbessertes landwirtschaftliches Bodenbearbeitungsgerät der eingangs genannten Art zu schaffen, das Nachteile des Standes der Technik vermeidet und Letzteren in vorteilhafter Weise weiterbildet. Insbesondere soll auch bei sehr großen Arbeitsbreiten von mehreren Metern eine hervorragende Bodenanpassung erreicht werden, ohne Instabilitäten beim Verbringen in die Transportstellung oder gar in der Transportstellung selbst in Kauf nehmen zu müssen.

Erfindungsgemäß wird die genannte Aufgabe durch ein landwirtschaftliches Bodenbearbeitungsgerät gemäß Anspruch 1 gelöst. Bevorzugte Ausgestaltungen der Erfindung sind Gegenstand der abhängigen Ansprüche.

Es wird also vorgeschlagen, den zusätzlichen Flügelschwenkachsen eine Verriegelung zuzuordnen, die eine Fixierung der Flügelsektionen in einer Neutralstellung ermöglicht, in der die Flügelsektionen zueinander weder zu stark in die eine noch zu stark in die andere Richtung verschwenkt sind. Die genannte Neutralstellung der Flügelsektionen bildet sozusagen eine Zwischenstellung, aus der heraus eine Flügelsektion gegenüber der benachbarten Flügelsektion bei gelöster Verriegelung sowohl in die eine als auch in die dazu entgegengesetzte andere Richtung verschwenkt werden kann. Können die Flügelsektionen in der vorgenannten Weise in der Arbeitsstellung zum Zwecke der Bodenanpassung sowohl zueinander überstreckt als auch dazu entgegengesetzt gebeugt werden, kann die Neutralstellung insbesondere eine nicht überstreckte und nicht gebeugte Mittelstellung bilden, in der sich die Flügelsektionen zumindest näherungsweise parallel zueinander erstrecken und/oder näherungsweise in einer gemeinsamen Ebene liegen.

Erfindungsgemäß ist eine Verriegelungseinrichtung zum Verriegeln des Druckmittelaktors, der zwei benachbarte Flügelsektionen über die dazwischen liegende Flügelschwenkachse hinweg verbindet, in einer Verriegelungsstellung vorgesehen, in der die Flügelsektionen in der genannten Neutralstellung gehalten sind. Durch die Verriegelung des Druckmittelaktors wird ein an sich schon vorhandenes Bauteil auch für die zusätzliche Funktion der Verriegelung genutzt und die entsprechenden Verriegelungskräfte über den Druckmittelaktor übertragen, so dass eine Platz sparende und dennoch stabile Ausbildung und Verriegelung erzielt werden kann. Die genannte Verriegelungseinrichtung kann hierbei insbesondere hydraulisch ausgebildet sein, um den Druckmittelaktor hydraulisch zu verriegeln, so dass auf zusätzliche, spezielle mechanische Verriegelungselemente verzichtet werden kann.

Vorteilhafterweise bildet die genannte Verriegelungsstellung des Druckmittelaktors gleichermaßen eine Zwischenstellung des Druckmittelaktors, in der sich der Druckmittelaktor zwischen seiner maximal gelängten und seiner maximal verkürzten Stellung befindet, d.h. eine Zwischenlänge einnimmt, aus der heraus der Druckmittelaktor sowohl gelängt als auch verkürzt werden kann, um im entriegelten Arbeitsbetrieb beispielsweise sowohl ein Überstrecken als auch ein entgegengesetztes Beugen der Flügelsektionen zu ermöglichen.

Um ein definiertes Anfahren der Verriegelungsstellung ohne komplexe hydraulische Steuereinrichtungen zu ermöglichen, kann der Druckmittelaktor in Weiterbildung der Erfindung eine Anschlagstellung besitzen, in der ein Druckmittelkolben des Druckmittelaktors gegen einen Anschlag gefahren ist und/oder durch Druckmittel an dem Anschlag gehalten wird. Vorteilhafterweise bildet die genannte Anschlagstellung dabei die genannte Verriegelungsstellung und gleichzeitig die vorgenannte Zwischenstellung, in der der Druckmittelaktor eine Zwischenlänge zwischen maximal gelängter und maximal verkürzter Stellung einnimmt. Obwohl also der Druckmittelaktor in der Verriegelungsstellung gegen einen Anschlag gefahren ist, kann der Druckmittelaktor im Arbeitsbetrieb bzw. der nicht verriegelten Arbeitsstellung gleichwohl aus der Verriegelungsstellung heraus sowohl verkürzt als auch verlängert werden, um die gewünschten Bodenanpassbewegungen der Flügelsektionen zu ermöglichen.

Insbesondere kann der genannte Druckmittelaktor als Doppelkolbenzylindereinheit mit zwei Kolben und zwei Zylindern ausgebildet sein, wobei in Weiterbildung der Erfindung die beiden Kolben miteinander axial fest verbunden und die beiden Zylinder axial zueinander beweglich angeordnet sein können. In alternativer Weiterbildung der Erfindung können auch die beiden Zylinder axialfest miteinander verbunden und die beiden Kolben axial zueinander beweglich angeordnet sein.

Insbesondere kann eine vorteilhafte Ausbildung der Erfindung darin bestehen, dass die Doppelkolbenzylindereinheit eine gemeinsame Kolbenstange umfasst, an der die beiden Kolben voneinander beabstandet befestigt sind, wobei ein erster der beiden Kolben in einem ersten Zylinder und ein zweiter der beiden Kolben in einem zweiten der beiden Zylinder jeweils verschieblich aufgenommen ist. Die beiden Zylinder können dabei über die genannte Kolbenstange miteinander verbunden und durch die Verschieblichkeit relativ zu den Kolben auf der genannten Kolbenstange zueinander axial verfahren werden, wobei einer der Zylinder an einer ersten Flügelsektion und der andere Zylinder an einer zweiten Flügelsektion angelenkt sein kann. Durch einen solchen Doppelkolbenzylinder ist es in einfacher Weise möglich, die beiden Flügelsektionen im Arbeitsbetrieb gegeneinander vorzuspannen, beispielsweise um eine äußere Flügelsektion mehr zu belasten oder weniger zu belasten und/oder umgekehrt mehr Bodenanpressdruck oder weniger Bodenanpressdruck an einer inneren Flügelsektion zu erzeugen.

Gemäß einer alternativen Weiterbildung der Erfindung kann die Doppelkolbenzylindereinheit auch zwei separate Kolbenstangen umfassen, die jeweils mit einem Kolben verbunden und jeweils einer von zwei benachbarten Flügelsektionen gekoppelt sind. Dabei kann der Kolben der einen Kolbenstange in einem ersten Zylinder und der Kolben der anderen Kolbenstange in einem zweiten Zylinder verschieblich aufgenommen sein, wobei die beiden genannten Zylinder starr miteinander verbunden sein können, insbesondere Rücken an Rücken koaxial starr verbunden sein können, so dass die beiden Kolbenstangen zu gegenüberliegenden Seiten aus den Zylindern herausstehen und die Kolben in separaten Zylinderkammern laufen.

In vorteilhafter Weiterbildung der Erfindung sind dabei die beiden Zylinder jeweils doppelt wirkend ausgebildet. Jeder Kolben kann seinen Zylinder in zwei Zylinderkammern unterteilen, wobei vorteilhafterweise jeder der beiden Zylinderkammern auf gegenüberliegenden Seiten eines Kolbens druckbeaufschlagbar ist. In einer Arbeitsstellung können die Kolben dabei in den Zylindern verschieblich gefahren werden, so dass sich die Stellwege der Kolben im jeweiligen Zylinder aufaddieren können. Soll indes die Doppelkolbenzylindereinheit verriegelt werden, werden beide Kolben vorteilhafterweise zur selben Seite hin jeweils gegen das Ende des Zylinders bzw. des darin vorgesehenen Stellwegs gefahren, so dass die Doppelkolbenzylindereinheit die vorgenannte Zwischenstellung einnimmt, in der die Doppelkolbenzylindereinheit insgesamt eine mittlere Länge einnimmt. Durch Druckbeaufschlagung der entsprechenden Druckkammern in den beiden Zylindern können die Kolben hydraulisch verriegelt werden, indem sie an die entsprechenden Anschläge bzw. Stirnenden der Zylinderkammern gefahren werden.

Die hydraulische Verriegelungseinrichtung kann dabei mit einem einfachen Mehrfach-Schaltventil bzw. Mehrwege-Schaltventil auskommen, durch das die Druckleitung des Hydrauliksystems wahlweise auf die benötigten Druckkammern in den beiden Zylindern geschaltet werden und/oder die nicht druckbeaufschlagten Kammern in den beiden Zylindern mit dem Tank bzw. Reservoir bzw. Rücklauf verbunden werden können.

Die vorliegende Erfindung wird nachfolgend anhand zweier bevorzugter Ausführungsbeispiele und zugehöriger Zeichnungen näher erläutert. In den Zeichnungen zeigen:
- Fig. 1:: eine perspektivische, heckseitige Ansicht eines landwirtschaftlichen Bodenbearbeitungsgerät zum Anbau an einen Schlepper nach einer vorteilhaften Ausführung der Erfindung, wobei das Bodenbearbeitungsgerät zwei seitliche Flügel mit jeweils mehreren Reihen von Bodenbearbeitungswerkzeugen aufweist, die an einem zentralen Maschinenrahmen angelenkt sind, der über ein Fahrwerk am Boden abgestützt und an den Schlepper anlenkbar ist,
- Fig. 2:: eine perspektivische frontseitige Ansicht des landwirtschaftlichen Bodenbearbeitungsgeräts aus Fig. 1, wobei die Flügel mit den Bodenbearbeitungswerkzeugen wie in Fig. 1 in ihrer abgesenkten Arbeitsstellung gezeigt sind,
- Fig. 3:: eine perspektivische, frontseitige Ansicht des Bodenbearbeitungsgeräts aus den vorhergehenden Figuren, wobei die Flügel mit den daran vorgesehenen Bodenbearbeitungswerkzeugen in einer aufgeschwenkten Nichtarbeitsstellung gezeigt sind,
- Fig. 4:: eine schematische Darstellung einer Doppelkolbenzylindereinheit, mittels derer die Flügelsektionen der Flügel des Bodenbearbeitungsgeräts aus den vorhergehenden Figuren im Arbeitsbetrieb vorgespannt beweglich gehalten und in der Transportstellung verriegelt werden können, wobei die Doppelkolbenzylindereinheit gemäß Fig. 4 zwei auf einer gemeinsamen Kolbenstange sitzende Kolben und zwei separate Zylinder umfasst,
- Fig. 5:: eine schematische Darstellung einer Doppelkolbenzylindereinheit nach einer alternative Ausbildung, bei der zwei auf separaten Kolbenstangen sitzende Kolben in zwei miteinander axialfest verbundenen Zylindern verschieblich geführt sind, und
- Fig. 6:: eine schematische Darstellung der hydraulischen Verriegelungseinrichtung zum Verriegeln der Doppelkolbenzylindereinheit in einer Zwischenstellung umfassend ein Mehrwege-Schaltventil nach einer beispielhaften Ausführung der Erfindung.

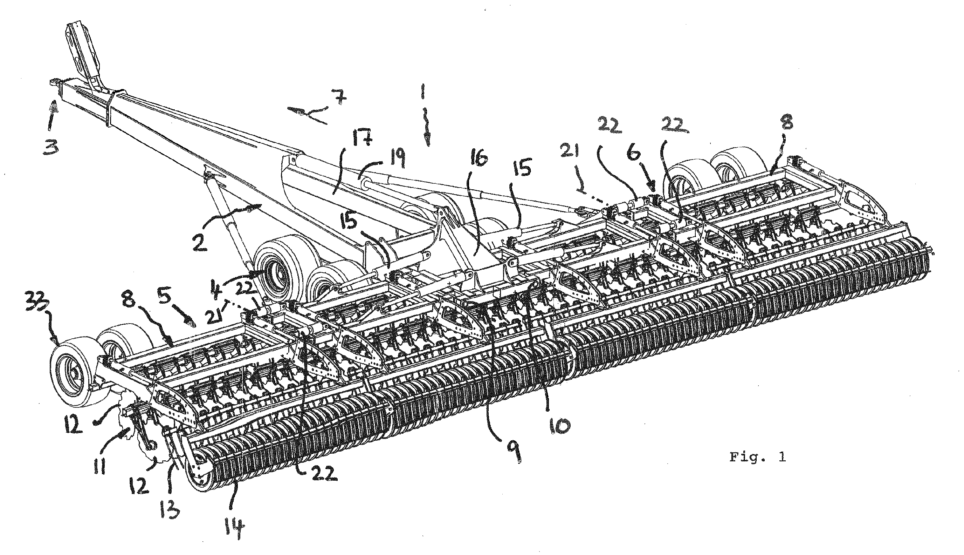

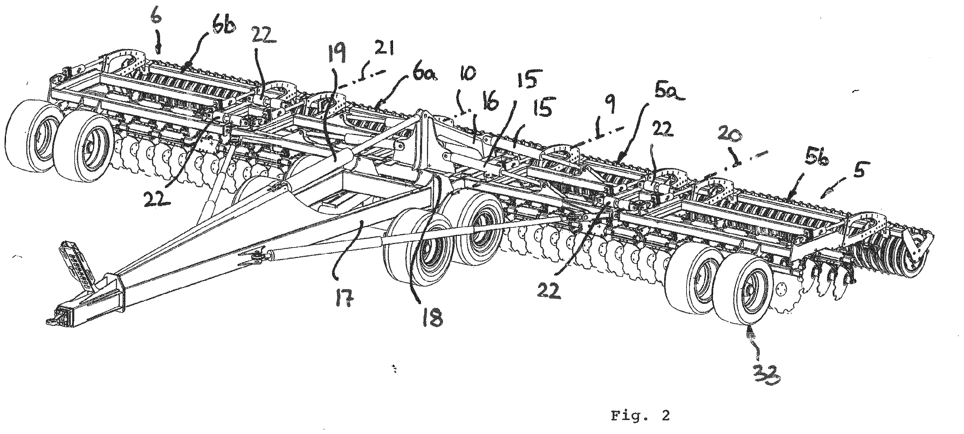

Wie die Figuren 1 und 2 zeigen, umfasst das Bodenbearbeitungsgerät 1 einen Maschinenrahmen 2, der über eine Anbauvorrichtung 3 an einem nicht gezeigten Schlepper angebaut werden und durch ein Fahrwerk 4 am Boden abgestützt sein kann. Das Bodenbearbeitungsgerät 1 kann dabei insbesondere als Aufsattelgerät ausgebildet sein, das mittels einer Deichsel am Schlepper angehängt wird und durch das Fahrwerk 4 am Boden abgestützt ist. Alternativ wäre es aber auch denkbar, das Bodenbearbeitungsgerät 1 mit einem Anbaubock auszubilden und/oder über eine Dreipunktanlenkung aushebbar am Schlepper anzubauen, wobei jedoch für große Arbeitsbreiten die in den Figuren gezeigte Aufsattelvariante vorteilhaft sein kann.

An dem genannten Maschinenrahmen 2 sind zwei Flügel 5 und 6 angebaut, die in Fahrtrichtung 7 betrachtet in der Arbeitsstellung seitlich rechts und links vom Maschinenrahmen 2 auskragen, wobei die genannten Flügel 5 und 6 jeweils Flügelrahmen 8 umfassen können, die zu dem Maschinenrahmen 2 um Rahmenschwenkachsen 9 und 10, die sich in der gezeigten Arbeitsstellung gemäß den Figuren 1 und 2 liegend in Fahrtrichtung 7 erstrecken, verschwenkt werden können.

Die auskragenden Flügel 5, 6 können durch jeweils ein Tastfahrwerk 33 am Boden abgestützt sein, das beispielsweise an äußeren, seitlichen Abschnitten der Flügel 5, 6 angeordnet sein kann, vgl. Fig. 1 und 2.

Wie die Figuren zeigen, können die Flügel 5 und 6 mit Bodenbearbeitungswerkzeugen versehen sein, die in mehreren Reihen quer zur Fahrtrichtung hintereinander angeordnet sein können, wobei je nach konkreter Ausbildung des Bodenbearbeitungsgeräts verschiedene Bodenwerkzeuge 11 vorgesehen sein können. Beispielsweise können die Bodenwerkzeuge 11 eine oder mehrere Reihen von Scharscheiben 12 umfassen, denen Scharstriegel 13 nachgeordnet sein können. Gegebenenfalls kann auch eine Rillenwalze 14 an den Flügeln 5 und 6 vorgesehen sein.

Die Flügel 5 und 6 können hierbei einschließlich der daran angeordneten Bodenwerkzeuge 11 durch Stellaktoren 15 um die genannten Rahmenschwenkachsen 9 und 10 relativ zum Maschinenrahmen 2 verschwenkt werden, wobei die Stellaktoren 15 dazu vorgesehen sein können, die Flügel 5 und 6 auszuheben, beispielsweise für das Vorgewende und/oder den Transport, und/oder um die Flügel 5 und 6 in der Arbeitsstellung nach unten auf den Boden zu drücken, um die Bodenandruckkraft der Bodenwerkzeuge 11 zu erhöhen. Die Stellaktoren 15 können beispielsweise Hydraulikzylinder umfassen, die einerseits an den Flügelrahmen 8 und andererseits am Maschinenrahmen 2 angelenkt sein können.

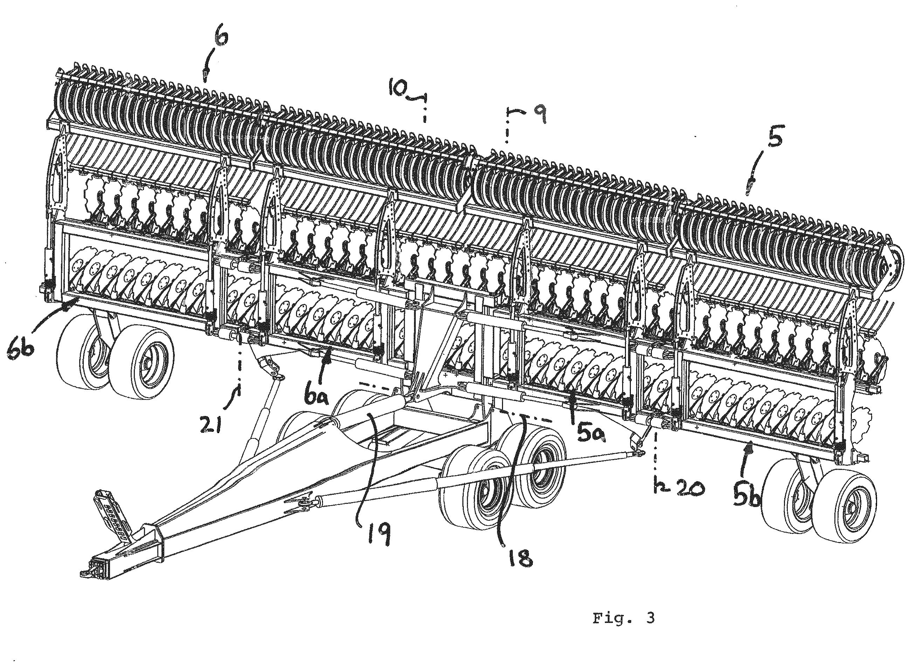

Wie Fig. 3 verdeutlicht, können die Flügel 5 und 6 dabei über die genannten Rahmenschwenkachsen 9 und 10 an einem Schwenkrahmenstück 16 angelenkt sein, das selbst wiederum an einem Zentralrahmenteil 17 schwenkbar angelenkt ist, und zwar um eine vorteilhafterweise liegende, sich quer zur Fahrtrichtung 7 erstreckende Schwenkachse 18, um die das genannte Schwenkrahmenstück 16 zusammen mit den daran angelenkten Flügeln 5 und 6 aufgekippt werden kann, bis sich die Rahmenschwenkachsen 9 und 10, die sich in der Arbeitsstellung liegend in Fahrtrichtung erstrecken, näherungsweise vertikal bzw. aufrecht erstrecken, wie dies Fig. 3 zeigt. In der genannten Stellung können die Flügel 5 und 6 um die Rahmenschwenkachsen 9 und 10 nach vorne in eine näherungsweise fahrtrichtungsparallele Ausrichtung verschwenkt werden, wobei sie in der nach vorne verschwenkten Transportstellung auf dem Maschinenrahmen 2 abgestützt werden können. Gegebenenfalls wäre es jedoch auch möglich, die Flügel 5 und 6 aus der in Fig. 3 gezeigten Stellung nach hinten in eine Transportstellung zu verschwenken, beispielsweise wenn das Fahrwerk 4 in Arbeitsstellung hinter den Flügeln 4, 5 positioniert ist.

Zum Verschwenken des Schwenkrahmenteils 16 kann ein Stellaktor 19 vorgesehen sein, beispielsweise in Form eines Hydraulikzylinders, der einerseits am Schwenkrahmenstück 16 und andererseits am Zentralrahmenstück 17 angelenkt sein kann, vgl. Figuren 1-3.

Durch die genannten Rahmenschwenkachsen 9 und 10, die sich in der in den Figuren 1 und 2 gezeigten Arbeitsstellung liegend in Fahrtrichtung erstrecken, können die beiden Flügel 5 und 6 bereits eine gewisse Bodenanpassbewegung ausführen und bei schräg verlaufenden Hangkonturen und/oder Längswellen oder Schrägwellen auf- und abscharnieren.

Um die genannte Bodenanpassung weiter zu verbessern, sind die Flügel 5 und 6 jeweils in zumindest zwei Flügelsegmente 5a und 5b bzw. 6a und 6b unterteilt, wobei die jeweils benachbarten Flügelsegmente 5a, 5b bzw. 6a, 6b eines Flügels 5 bzw. 6 durch eine Flügelschwenkachse 20 bzw. 21 zueinander schwenkbar verbunden sind, wobei sich die genannten Flügelschwenkachsen 20, 21 zwischen den Flügelsegmenten 5a, 5b und 6a, 6b in Arbeitsstellung liegend in Fahrtrichtung erstrecken können.

Durch die genannten Flügelschwenkachsen 20 und 21 können die benachbarten Flügelsektionen 5a und 5b bzw. 6a und 6b zueinander auf- und abscharnieren, um sich besser an die Bodenkontur anzupassen. Insbesondere kann die Schwenkverbindung dabei derart ausgebildet sein, dass es der äußere Schwenksektion 5b bzw. 6b möglich ist, relativ zu der inneren Schwenksektion 5a bzw. 6a sowohl nach oben als auch nach unten zu schwenken, so dass die Flügelsektionen 5a, 5b und 6a, 6b sowohl eine überstreckte als auch eine dazu entgegengesetzt gebeugte Konfiguration einnehmen können. Mit anderen Worten können die Flügelsektionen 5a, 5b und 6a, 6b aus der in den Figuren 1 und 2 gezeigten Neutralstellung, in der sich die Flügelsektionen näherungsweise parallel zueinander und/oder in einer gemeinsamen Ebene erstrecken und/oder einen näherungsweise insgesamt ebenen Flügel bilden, sowohl in die eine als auch in die entgegengesetzte andere Richtung verschwenken.

Um die Schwenkbewegung der Flügelsektionen 5a, 5b und 6a, 6b um die Flügelschwenkachsen 20 und 21 kontrollieren bzw. steuern zu können, sind den genannten Flügelschwenkachsen 20 und 21 Druckmittelaktoren 22 zugeordnet, die insbesondere als Hydraulikzylinder ausgebildet sein können und jeweils zwei benachbarte Flügelsektionen unter Überbrückung der Flügelschwenkachsen verbinden. Insbesondere können die Druckmittelaktoren 22 einerseits an einer ersten Flügelsektion und andererseits an einer zweiten, dazu benachbarten Flügelsektion jeweils gelenkig angelenkt sein, wobei die Anlenkpunkte von den Flügelschwenkachsen 20 und 21 beabstandet sind, um die Flügelsektionen relativ zueinander rotatorisch beaufschlagen bzw. verschwenken zu können.

Die genannten Druckmittelaktoren 22 können dabei insbesondere dazu vorgesehen sein, um die Flügelsektionen 5a, 5b bzw. 6a, 6b in der Arbeitsstellung rotatorisch relativ zueinander vorzuspannen, wobei je nach Ausbildung des Bodenbearbeitungsgeräts unterschiedliche Vorspannrichtungen einstellbar sein können bzw. sinnvoll sein können. Beispielsweise können die Druckmittelaktoren 22 die äußeren Flügelsektionen 5b und 6b jeweils nach unten auf den Boden zu vorspannen, um die Bodenandruckkräfte an den seitlichen Rändern der Flügel zu erhöhen. Umgekehrt kann es je nach Bodenverhältnissen auch sinnvoll sein, die äußeren Flügelsektionen gewichtszuentlasten und/oder leicht nach oben vorzuspannen, um die inneren Flügelsektionen 5a bzw. 6a mit einer stärkeren Bodenaufstandskraft zu beaufschlagen.

Vorteilhafterweise sind die genannten Druckmittelaktoren 22 doppelt wirkend ausgebildet und von einer Druckmittelsteuervorrichtung ansteuerbar, so dass sie wahlweise eine Vorspannung in die eine Richtung oder in die entgegengesetzte andere Richtung bereitstellen zu können.

Um Instabilitäten beim Ausheben der Flügel 5 und 6 in die Transportstellung zu vermeiden und die genannten Flügel exakt in die Transportstellung steuern zu können, können die genannten Druckmittelaktoren 22 in einer Verriegelungsstellung fixiert bzw. verriegelt werden, so dass die Flügelsektionen 5a, 5b und 6a, 6b relativ zueinander in einer bestimmten Stellung fixiert sind.

Vorteilhafterweise ist die hierfür vorgesehene Verriegelungsvorrichtung 23 dabei derart beschaffen, dass die Druckmittelaktoren 22 in einer Stellung verriegelt werden können, in der die Flügelsektionen 5a, 5b bzw. 6a, 6b in ihrer Neutralstellung gehalten werden, wobei die genannte Neutralstellung wie zuvor erläutert eine Zwischenstellung bilden kann, die sich zwischen der maximal überstreckten und der maximal entgegengesetzt gebeugten Stellung befinden kann und insbesondere die Stellung bilden kann, in der sich die Flügelsektionen näherungsweise parallel und/oder näherungsweise in einer gemeinsamen Ebene erstrecken.

Insbesondere kann die Verriegelungseinrichtung 23 dazu ausgebildet sein, die schwenkbaren Flügelsektionen 5a, 5b und 6a, 6b in der in den Figuren 1 und 2 gezeigten Soll-Arbeitsstellung für ebene Böden zu verriegeln.

Die genannte Verriegelungseinrichtung 23 ist dabei hydraulisch arbeitend ausgebildet, um die Druckmittelaktoren 22 in der vorgenannten Verriegelungsstellung zu verriegeln.

Um komplexe Hydrauliksteuerventile und -mittel vermeiden zu können, gleichwohl aber eine stabile hydraulische Verriegelung zu ermöglichen, können die Druckmittelaktoren 22 als Doppelkolbenzylindereinheiten 24 ausgebildet sein, die jeweils zwei Kolben 25, 26 und zwei Zylinder 27, 28 umfassen. Dabei können entweder die Kolben 25 und 26 zueinander axial fest fixiert sein und die Zylinder 27 und 28 axial zueinander verstellbar sein oder es können die beiden Zylinder 27 und 28 axialfest zueinander fixiert sein und die beiden Kolben 25 und 26 zueinander verschieblich sein.

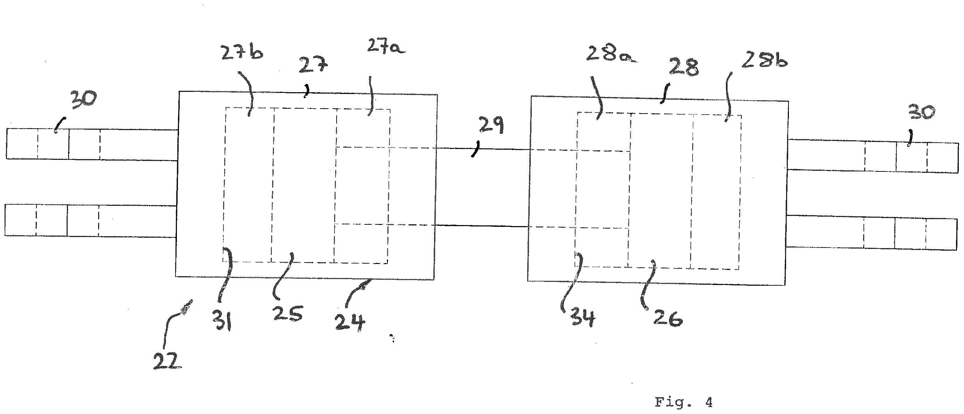

Die Doppelkolbenzylindereinheit 24 zeigt dabei die Fig. 4, gemäß der die beiden Kolben 25 und 26 auf einer gemeinsamen Kolbenstange 29 sitzen und damit axialfest verbunden sein können. Die beiden Kolben 25 und 26 sind dabei jeweils verschieblich in einem der beiden Zylinder 27 und 28 aufgenommen, wobei die genannten Zylinder 27 und 28 voneinander getrennt sind und jeweils ein Anlenkelement 30 zum gelenkigen Anlenken der Doppelkolbenzylindereinheit 24 an den zu verschwenkenden Flügelsektionen aufweisen.

Wie Fig. 4 zeigt, unterteilen die Kolben 25 und 26 ihren jeweiligen Zylinder 27 bzw. 28 in zwei Druckkammern 27a, 27b bzw. 28a, 28b, so dass jeder Zylinder doppelt wirkend ausgebildet ist bzw. jeder Kolben im jeweiligen Zylinder 27 und 28 wahlweise in die eine oder in die entgegengesetzte andere Richtung verfahren werden kann.

Durch Beaufschlagen der gebildeten Druckkammern in den Zylindern 27 und 28 in jeweils verschiedenen Kombinationen können unterschiedliche Vorspannrichtungen sowie eine Verriegelung in einer Zwischenstellung, in der die Doppelkolbenzylindereinheit eine mittlere Länge zwischen einer maximal gelängten und einer maximal verkürzten Stellung einnimmt, erzielt werden. Werden beispielsweise die beiden von den Kolbenstangen durchsetzten Druckkammern 27a und 28a druckbeaufschlagt, wird die Doppelkolbenzylindereinheit 24 verkürzt, wodurch die äußeren Flügelsektionen 5b und 6b gewichtsentlastet werden. Werden umgekehrt die größeren Druckmittelkammern 27b und 28b druckbeaufschlagt, wird die Doppelkolbenzylindereinheit 24 gelängt, wodurch die äußeren Flügelsektionen 5b und 6b stärker belastet bzw. gegen den Boden gedrückt werden.

Werden andererseits die Druckkammern derart druckbeaufschlagt, dass die Kolbenstange 29 in den einen Zylinder einfährt und aus dem anderen Zylinder ausfährt, beispielsweise durch Druckbeaufschlagen der kolbenstangendurchsetzten kleineren Druckkammer 27a im Zylinder 27 und Druckbeaufschlagen der größeren Druckkammer 28b im anderen Zylinder 28, fahren die beiden Kolben 25 und 26 in ihren Zylindern 27 und 28 jeweils gegen einen Anschlag 30, 31, der von den Stirnseiten der Zylinder gebildet sein kann. In einer solchen Anschlagstellung der Kolben 25 und 26 nimmt die Doppelkolbenzylindereinheit 24 eine mittlere Länge ein und hält die jeweiligen Flügelsektionen in deren Neutralstellung fest.

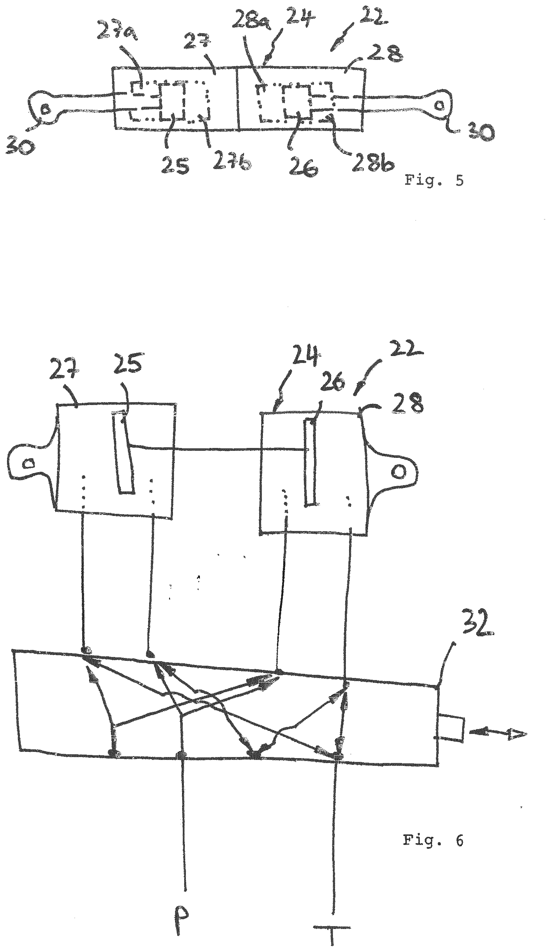

Alternativ zu der in Fig. 4 gezeigten Ausführung kann die Doppelkolbenzylindereinheit 24 auch zwei separate Kolbenstangen 29 umfassen, die jeweils axialfest einen Kolben 25 und 26 tragen und an ihren freien, herausstehenden Enden die Anlenkelemente 30 zum Anlenken der Doppelkolbenzylindereinheit 24 an den jeweiligen Flügelsektionen aufweisen können. Die Kolben 25 und 26 sind dabei wiederum axialverschieblich in Zylindern 27 und 28 aufgenommen, wobei die genannten Zylinder 27 und 28 jedoch axialfest miteinander verbunden sind, insbesondere Rücken an Rücken koaxial angeordnet und starr miteinander verbunden sein können, vgl. Fig. 5.

Durch Beaufschlagen der entsprechenden Druckkammern 27a, 27b und 28a, 28b in entsprechenden Kombination miteinander lassen sich auch hier verschiedene Stellungen und/oder Wirkrichtungen einstellen. Werden die Druckkammern so beaufschlagt, dass beide Kolbenstangen gegenläufig ausfahren, wird die Doppelkolbenzylindereinheit 24 verlängert. Werden die Druckkammern andererseits so beaufschlagt, dass beide Kolbenstangen einfahren, wird eine Verkürzung erzielt. Ferner können die Druckkammern so beaufschlagt werden, dass die eine Kolbenstange einfährt und die andere Kolbenstange ausfährt, bis die Kolben 25 und 26 jeweils die Anschläge 34 bzw. 31 erreichen, wodurch eine verriegelte Mittelstellung hinsichtlich der Länge der Doppelkolbenzylindereinheit 24 eingestellt werden kann.

Die Beaufschlagung der Doppelkolbenzylindereinheit 24 kann dabei in einfacher Weise durch ein Mehrwege-Schaltventil 32 erfolgen, das beispielsweise als 6/2-Ventil ausgebildet sein kann, wenn es ausreicht, neben der Verriegelungsstellung nur eine Vorspannrichtung einstellen zu können, beispielsweise zur vollständig ausgefahrenen oder gelängten Stellung hin.

Alternativ kann auch ein 6/3-Ventil vorgesehen werden, um wahlweise in die eine oder die entgegengesetzte andere Richtung vorspannen und zusätzlich verriegeln zu können.

Zusätzlich zu einem solchen Schaltventil können weitere hydraulische Steuereinrichtungen vorgesehen werden, d.h. das Schaltventil muss nicht direkt mit der Druckquelle P und direkt mit dem Tank bzw. Rücklauf T verbunden sein, sondern es können auch Druckreduziereinrichtungen vorgesehen sein, beispielsweise um die Vorspannung stärker oder schwächer einstellen zu können und/oder die Verriegelungskraft einstellen zu können.

## Patentansprüche

1. Landwirtschaftliches Bodenbearbeitungsgerät zum Anbau an einen Schlepper, mit einem Maschinenrahmen (2), an dem seitliche Flügel (5, 6) die Bodenbearbeitungswerkzeuge (11) tragen, angelenkt sind, wobei die Flügel (5, 6) jeweils zum Maschinenrahmen (2) um eine in Arbeitsstellung liegende, etwa in Fahrtrichtung weisende Rahmenschwenkachse (9, 10) schwenkbar sind und jeweils in zumindest zwei Flügelsektionen (5a, 5b; 6a, 6b) unterteilt sind, die zueinander um eine in Arbeitsstellung liegende, etwa in Fahrtrichtung weisende Flügelschwenkachse (20, 21) schwenkbar sind, wobei die Flügelsektionen (5a, 5b; 6a, 6b) jeweils durch zumindest einen Druckmittelaktor (22) miteinander verbunden sind, der bei Schwenkbewegungen der Flügelsektionen zueinander Längenänderungen erfährt und in der Arbeitsstellung zum Zwecke der Bodenanpassung Schwenkbewegungen der Flügelsektionen (5a, 5b; 6a, 6b) aus deren Neutralstellung zueinander heraus sowohl in die eine als auch die dazu entgegengesetzte andere Schwenkrichtung gestattet, **dadurch gekennzeichnet, dass** eine Verriegelungseinrichtung (23) zum Verriegeln des Druckmittelaktors (22) in einer Verriegelungsstellung, die eine Zwischenstellung ist, in der der Druckmittelaktor (22) eine Zwischenlänge zwischen maximal gelenkten und maximal verkürzten Stellungen einnimmt, und in der die Flügelsektionen (5a, 5b; 6a, 6b) in der genannten Neutralstellung gehalten sind, vorgesehen ist.

2. Landwirtschaftliches Bodenbearbeitungsgerät nach dem vorhergehenden Anspruch, wobei der Druckmittelaktor (22) eine Anschlagstellung, in der ein Druckmittelkolben des Druckmittelaktors (22) gegen einen Anschlag (30, 31) gefahren ist, aufweist, wobei die genannte Anschlagstellung die genannte Verriegelungsstellung und gleichzeitig die genannte Zwischenstellung bildet, in der der Druckmittelaktor (22) eine Zwischenstellung zwischen maximal gelängter und maximal gekürzter Stellung einnimmt.

3. Landwirtschaftliches Bodenbearbeitungsgerät nach einem der vorhergehenden Ansprüche, wobei der Druckmittelaktor (22) als Doppelkolbenzylindereinheit (24) mit zwei Kolben (25, 26) und zwei Zylindern (27, 28) ausgebildet ist, bei der entweder die beiden Kolben (25, 26) miteinander axialfest verbunden oder die beiden Zylinder (27, 28) axialfest miteinander verbunden sind.

4. Landwirtschaftliches Bodenbearbeitungsgerät nach dem vorhergehenden Anspruch, wobei die Doppelkolbenzylindereinheit (24) eine gemeinsame Kolbenstange (29) umfasst, an der die beiden Kolben (25, 26) voneinander beabstandet fixiert sind, wobei einer der beiden Kolben (25) in einem ersten der beiden Zylinder (27) und der zweite der beiden Kolben (26) in einem zweiten der beiden Zylinder (28) verschieblich geführt ist, wobei die beiden Zylinder (27 und 28) voneinander separat ausgebildet sind und jeweils ein Anlenkelement (30) zum Anlenken an eine der Flügelsektionen aufweist.

5. Landwirtschaftliches Bodenbearbeitungsgerät nach Anspruch 3, wobei die Doppelkolbenzylindereinheit (24) zwei separate Kolbenstangen (29) aufweist, an denen jeweils ein Kolben (25, 26) befestigt und jeweils ein Anlenkmittel (30) zum Anlenken an einer der Flügelsektionen vorgesehen ist, wobei die beiden Kolben (25, 26) in zwei Zylindern (27, 28) die koaxial zueinander angeordnet und axialfest miteinander verbunden sind, verschieblich geführt sind.

6. Landwirtschaftliches Bodenbearbeitungsgerät nach einem der vorhergehenden Ansprüche, wobei die Verriegelungseinrichtung (23) hydraulisch ausgebildet ist.

7. Landwirtschaftliches Bodenbearbeitungsgerät nach dem vorhergehenden Anspruch, wobei die Verriegelungseinrichtung (23) ein Mehrwege-Schaltventil (32) zum Verriegeln des Druckmittelaktors (22) aufweist.

## Claims

1. Agricultural soil working implement for the attachment to a tractor, with a machine frame (2), on which lateral wings (5, 6) that support the soil working tools (11) are articulated, wherein the wings (5, 6) are respectively pivotable about a frame pivot axis (9, 10) approximately directed in the direction of travel, respectively oriented horizontally in the working position with respect to the machine frame (2), and are respectively subdivided into at least two wing sections (5a, 5b; 6a, 6b), which are pivotable relative to one another about a wing pivot axis (20, 21) facing approximately in the direction of travel, oriented horizontally in the working position, wherein the wing sections (5a, 5b; 6a, 6b) are respectively connected to one another by means of at least one pressure medium actuator (22), which experiences changes in length when the wing sections are pivoted relative to one another, which actuator, in the working position, allows pivoting movements of the wing sections (5a, 5b; 6a, 6b) from their neutral position into one as well as into the other, opposite pivoting direction, **characterized in that** a locking means (23) is provided for locking the pressure medium actuator (22) in a locking position, which is an intermediate position, where the pressure medium actuator (22) has an intermediate length between a maximally elongated and a maximally shortened position, and in which the wing sections (5a, 5b; 6a, 6b) are held in the mentioned neutral position.

2. Agricultural soil working implement according to the preceding claim, wherein the pressure medium actuator (22) has a stop position, where a pressure medium piston of the pressure medium actuator (22) is moved against a stop (30, 31), wherein the mentioned stop position forms the mentioned locking position and, at the same time, the mentioned intermediate position, where the pressure medium actuator (22) assumes an intermediate position between maximally elongated and maximally shortened position.

3. Agricultural soil working implement according to any one of the preceding claims, wherein the pressure medium actuator (22) is configured as a double piston cylinder unit (24) having two pistons (25, 26) and two cylinders (27, 28), in which either the two pistons (25, 26) are connected to one another in an axially-fixed manner, or the two cylinders (27, 28) are connected to one another in an axially-fixed manner.

4. Agricultural soil working implement according to the preceding claim, wherein the double piston cylinder unit (24) comprises a common piston rod (29), on which the two pistons (25, 26) are fixed in a manner spaced from one another, wherein one of the two pistons (25) is slidably guided in a first one of the two cylinders (27) and the second of the two cylinders (26) in slidably guided in a second one of the two cylinders (28), wherein the two cylinders (27 and 28) are separately formed and each comprise an articulation element (30) for the articulation with one of the wing sections.

5. Agricultural soil working implement according to claim 3, wherein the double piston cylinder unit (24) comprises two separate piston rods (29), on which respectively one piston (25, 26) is attached and respectively one articulation means (30) for the articulation to one of the wing sections is provided, wherein the two pistons (25, 26), which are arranged coaxially with one another and are connected to one another in an axially-fixed manner, are slidably guided.

6. Agricultural soil working implement according to any one of the preceding claims, wherein the locking means (23) is configured hydraulically.

7. Agricultural soil working implement according to the preceding claim, wherein the locking means (23) comprises a multiway switching valve (32) for the locking of the pressure medium actuator (22).

## Revendications

1. Appareil agricole pour le travail du sol destiné à être attelé à un tracteur, comprenant un cadre de machine (2), sur lequel sont articulés des ailes latérales (5, 6) portant des outils de travail du sol (11), les ailes (5, 6) étant pivotables respectivement par rapport au cadre de machine (2) autour d'un axe de pivotement de cadre (9, 10) horizontal en position de travail et orienté approximativement dans le sens de la marche, et étant divisées respectivement en au moins deux segments d'aile (5a, 5b ; 6a, 6b), qui sont pivotables l'un par rapport à l'autre sur un axe de pivotement d'aile (20, 21) horizontal dans la position de travail et approximativement orienté dans le sens de la marche, les segments d'aile (5a, 5b ; 6a, 6b) étant reliés l'un à l'autre respectivement par au moins un actionneur à fluide sous pression (22), qui subit des modifications en longueur lors de mouvements pivotants des segments d'aile l'un par rapport à l'autre et permet, dans la position de travail, des mouvements pivotants des segments d'aile (5a, 5b ; 6a, 6b) depuis leur position neutre l'un par rapport à l'autre tant dans un sens de pivotement que dans l'autre sens de pivotement opposé à celui-ci à des fins d'adaptation au sol, **caractérisé en ce qu'**un dispositif de verrouillage (23) est prévu pour le verrouillage de l'actionneur à fluide sous pression (22) dans une position de verrouillage, qui est une position intermédiaire dans laquelle l'actionneur à fluide sous pression (22) adopte une longueur intermédiaire entre des positions guidées au maximum et raccourcie au maximum et dans laquelle sont prévus les segments d'aile (5a, 5b ; 6a, 6b) sont maintenus dans ladite position neutre.

2. Appareil agricole pour le travail du sol selon la revendication précédente, dans lequel l'actionneur à fluide sous pression (22) comporte une position de butée, dans laquelle un piston à fluide sous pression de l'actionneur à fluide sous pression (22) est poussé contre une butée (30, 31), ladite position de butée formant ladite position de verrouillage et en même temps ladite position intermédiaire, dans laquelle l'actionneur à fluide sous pression (22) adopte une position intermédiaire entre une position rallongée au maximum et raccourcie au maximum.

3. Appareil agricole pour le travail du sol selon l'une des revendications précédentes, dans lequel l'actionneur à fluide sous pression (22) est réalisé sous la forme d'une unité de cylindre à piston double (24) dotée de deux pistons (25, 26) et deux cylindres (27, 28), dans laquelle soit les deux pistons (25, 26) sont reliés l'un à l'autre de manière fixe dans le sens axial, soit les deux cylindres (27, 28) sont reliés l'un à l'autre de manière fixe dans le sens axial.

4. Appareil agricole pour le travail du sol selon la revendication précédente, dans lequel l'unité de cylindre à piston double (24) comprend une tige de piston (29) commune, sur laquelle les deux pistons (25, 26) sont fixés à distance l'un de l'autre, l'un des deux pistons (25) étant guidé de manière coulissante dans un premier des deux cylindres (27) et le second des deux pistons (26) étant guidé de manière coulissante dans un second des deux cylindres (28), les deux cylindres (27 et 28) étant réalisés séparés l'un de l'autre et comportant respectivement un élément d'articulation (30) pour l'articulation sur un des segments d'aile.

5. Appareil agricole pour le travail du sol selon la revendication 3, dans lequel l'unité de cylindre à piston double (24) comporte deux tiges de piston (29) séparées, auxquelles un piston (25, 26) est respectivement fixé et sur lesquelles un moyen d'articulation (30) est respectivement prévu pour l'articulation sur un des segments d'aile, les deux pistons (25, 26) étant guidés de manière coulissante dans deux cylindres (27, 28) qui sont disposés coaxialement l'un avec l'autre et reliés l'un à l'autre de manière fixe dans le sens axial.

6. Appareil agricole pour le travail du sol selon l'une des revendications précédentes, dans lequel le dispositif de verrouillage (23) est réalisé hydraulique.

7. Appareil agricole pour le travail du sol selon la revendication précédente, dans lequel le dispositif de verrouillage (23) comporte une soupape de commande à plusieurs voies (32) pour verrouiller l'actionneur à fluide sous pression (22).
